# EUROPEAN PATENT SPECIFICATION

(11) **EP 3 072 473 B1**
(45) Date of publication and mention of the grant of the patent: **29.08.2018**
(21) Application number: 16161695.8
(22) Date of filing: 22.03.2016
(51) Int. Cl.: A61C 7/08, A61C 7/10, A61C 8/00

(54) **ORTHODONTIC APPLIANCE WITH THERMOFORMED ALIGNERS**
KIEFERORTHOPÄDISCHE VORRICHTUNG MIT WÄRMEGEFORMTEN AUSRICHTERN
APPAREIL ORTHODONTIQUE AVEC DES ALIGNEURS THERMOFORMÉS

(30) Priority: 25.03.2015 US 201562138227 P
(43) Date of publication of application: 28.09.2016
(73) Proprietor: Ormco Corporation, Orange, CA 92867 (US)
(72) Inventor: ALAUDDIN, Sammel Shahrier, Rancho Cucamonga, CA 91730 (US); ROBERTS, W. Eugene, Indianapolis, IN 46202 (US)
(74) Representative: Findlay, Alice Rosemary

(56) References cited:
- WO-A2-2006/052414
- CN-U- 204 092 220
- DE-U1-202005 006 171
- JP-B2- 4 143 572
- US-A- 4 413 978
- US-A1- 2009 130 635
- US-A1- 2010 239 993

## Description

The present invention is directed to an orthodontic appliance and particularly to orthodontic aligners.

In conventional orthodontic treatment, an orthodontist or an assistant affixes an orthodontic appliance, such as, orthodontic brackets, to the patient's teeth and engages an archwire into a slot of each bracket. The archwire applies corrective forces that coerce the teeth to move into orthodontically correct positions. Traditional ligatures, such as small elastomeric O-rings or fine metal wires, are employed to retain the archwire within each bracket slot. Due to difficulties encountered in applying an individual ligature to each bracket, self-ligating orthodontic brackets have been developed that eliminate the need for ligatures by relying on a movable latch or slide for captivating the archwire within the bracket slot.

Conventional orthodontic brackets are ordinarily formed from stainless steel, and are bonded to the teeth to form a solid mechanical linkage, making the brackets and archwire very effective in repositioning teeth. A drawback, however, is that patients undergoing orthodontic treatment using metal orthodontic brackets may be embarrassed by the visibility of metal, which is not cosmetically pleasing. To address the unsightliness of metal brackets, certain conventional orthodontic brackets incorporate a bracket body of a transparent or translucent non-metallic material, such as a clear or translucent polymer or a clear or translucent ceramic that assumes the color or shade of the underlying tooth.

Alternatives to orthodontic brackets include other clear or less visible appliances. The most common of these are so-called "aligners" that are interchangeable by the patient during treatment. The clinician may prescribe a series of aligners, which are generally placed over but are not themselves adhesively secured or otherwise attached to the patient's teeth, to move one or more teeth from their original position to their aesthetically pleasing position. Typically, a series of aligners is required to fully treat the patient because the degree of movement produced by an aligner is limited. As such, when used in a series, each aligner in the series may be designed to fulfill a portion of the treatment process or move one or more teeth over a portion of the entire distance toward the desired position.

One such aligner is the Invisalign® system available from Align Technology, Inc. The Invisalign® system includes removable aligners that are to be worn by the patient. Generally, these aligners are clear or transparent polymer orthodontic devices that are removably positioned over the teeth of the maxilla and/or the teeth of the mandible. By this system, as treatment progresses, the patient removes one aligner having a specific prescription and replaces it with another aligner having a second, different prescription. Each aligner is responsible for moving the teeth toward their final predetermined or aesthetically correct position.

The Invisalign aligners are fabricated by way of a physical and computer aided molding process. The method begins by forming an impression of the patent's dentition using a suitable impression material, such as alginate or polyvinylsiloxane (PVS). Plaster is then poured into the impression to create a permanent, three-dimensional model of the dentition. To create an appliance to reflect the next desired tooth configuration in the series of treatment stages, a new three-dimensional model must be created that reflects the patient's dentition in the desired configuration. This involves capturing the shapes of the teeth in the three dimensional plaster model into a computer aided design system. Then, in the computer aided design system, the teeth are separated by a computerized process, and the teeth are reset in the desired configuration. The resulting computerized model of the patient's dentition in a desired configuration is then used to print a physical model of that tooth configuration. Finally, clear plastic which will form the aligner, such as a polyurethane, is molded over the physical model of the tooth configuration. Subsequent physical steps trim the molded aligner along the gingival boundary, and remove sharp edges or portions which might contact and irritate the gingiva. In addition, the aligner surface is typically smoothed via a process such as tumbling, to remove any residual marks picked up by the aligner from the stereolithographically printed physical model.

Notably, the thickness of the aligners is predetermined by the thickness of the thermoplastic which is a uniform thickness. There is no commercialized aligner system capable of fabricating targeted non-uniform thicknesses to strengthen certain sections of an aligner or fabricating other custom features to facilitate stable and rigid attachment. Certain tooth movements are difficult to achieve with aligners of uniform thickness because in certain areas, particularly in the posterior, the force required for certain movements cannot be generated by the aligner.

In some cases, aligners utilize attachments to facilitate coupling of the aligners to the teeth. Accurate placement and coupling of the attachment to the aligner, however, has always been a source of challenge. In the Invisalign process, the computer-aided models of the teeth are enhanced by including models of attachments that may be subsequently added to the teeth. Then the fabrication method described above is used to create an aligner having windows at the locations where the attachments are needed on the teeth. This 'null' aligner is designed to fit the teeth exactly, but normally will not do so due to errors in tooth segmentation, the impression process, and other sources. The null aligner is typically left on the teeth for 24-48 hours, after which the attachments are placed on the teeth through the windows in the null aligner. The thus-positioned attachments may then be used for subsequent aligners.

Treatment of malocclusion by aligners faces challenges other than manufacture. Specifically, aligners fastened with attachments may prove very difficult to install, as a result of the limited number of shapes that the attachment apertures on the aligner may take consistently with the Invisalign® manufacturing process. Moreover, aligners may bind with the attachments and prove very difficult to remove as well.

In the current state of the art, orthodontic aligners have been attached to auxiliary systems such as temporary anchorage devices (TADs) to allow for targeted force to be created without relying on the teeth within the mouth to serve as anchors. Attachment to auxiliary systems is currently achieved with elastics or chains by hooking one end of the elastic/chain to the aligner and the other end to the TAD. However, elastics may not yield continuous consistent forces and could deliver unpredictable outcomes. Additionally, when employing multiple TADs and consequently multiple elastic attachments working in unison, the results may be is even less predictable.

In current practice, it is not feasible for a patient to wear aligners, sectional braces and other similar auxiliary systems simultaneously. Rather, a thermoformed aligner must be substantially trimmed to fit over the sectional braces or other auxiliary device, but this can weaken the aligner such that it may not provide the necessary retention, anchorage, and/or force to facilitate the intended programmed movement of the aligner. Similarly, in the more conventional implementation where buttons for elastics attachment are bonded to teeth, if the aligner is trimmed to facilitate the buttons the aligner may become weak in the trimmed areas so adjacent teeth may not move predictably. Additionally, when hooks are cut into aligners to facilitate Class II and Class III elastics, it may cause unintended movement in teeth adjacent to the hooked section of the aligner.
It would be desirable to provide an alternative apparatus and methodology for realizing aligners that can be stably mechanically fixed to auxiliary devices and mechanisms such as sectional braces, TADs, hooks, buttons, and auxiliary mounts. Such apparatus and methods should be economical, reusable, reduce time consumption, reduce material waste, and, in particular, should reduce the need for fabricating multiple casts of teeth arrangements for stages in the orthodontic treatment.

WO2006/052414 discloses a dental appliance preformed or customised to receive the teeth of a patient and a wire insertable in to the appliance to expand or constrict the appliance.

The invention is defined by the claims.

The present invention comprises an orthodontic appliance in the form of an aligner of polymeric material formed with cavities for teeth that cause movement of at least one tooth, where the appliance is combined with an extender of polymeric material in a shape matable to the aligner, which applies a supportive load to the aligner to assist in the movement of at least one tooth by the aligner, and a temporary anchorage device (TAD) is installed in the bone structure of the patient and engaged to an aperture of the extender such that the TAD provides a mechanical anchor for the extender and the load applied by the aligner.

In preferred embodiments of the present invention, the appliance may be an aligner which encapsulates all of the teeth of a patient's mandible or maxilla, and the polymeric material is capable of applying a load to a tooth sufficient to cause remodeling of adjacent bone. In the exemplary embodiment, the appliance and/or extender is formed in a series of layers that collectively form the plural cavities.

In the disclosed embodiment of the present invention, one or more additional aligners may be mated to and used with the extender and the TADs.

The invention will now be further described by way of example with reference to the accompanying drawings, in which:
Fig. 1 is perspective view of a patient's palate showing an exemplary location where TADs can be attached as part of carrying out the presently disclosed method;
Fig. 2 is a perspective view of a patient wearing sectional braces close to the extraction of the second premolar, illustrating one circumstance in which the presently disclosed method is advantageous; wherein the method is not part of the present invention;
Fig. 3 is a disassembled perspective view of a patient's palate including TADs, an aligner and extender manufactured for installation thereon, and the TAD caps for holding the aligner and extender in place on the palate;
Fig. 4 is an illustration of the components of a TAD of the type suitable for use in accordance with some embodiments of the present invention; and
Fig. 5 is a flow chart of a manufacturing process in accordance with some embodiments of the present invention; wherein the manufacturing process is not part of the invention.

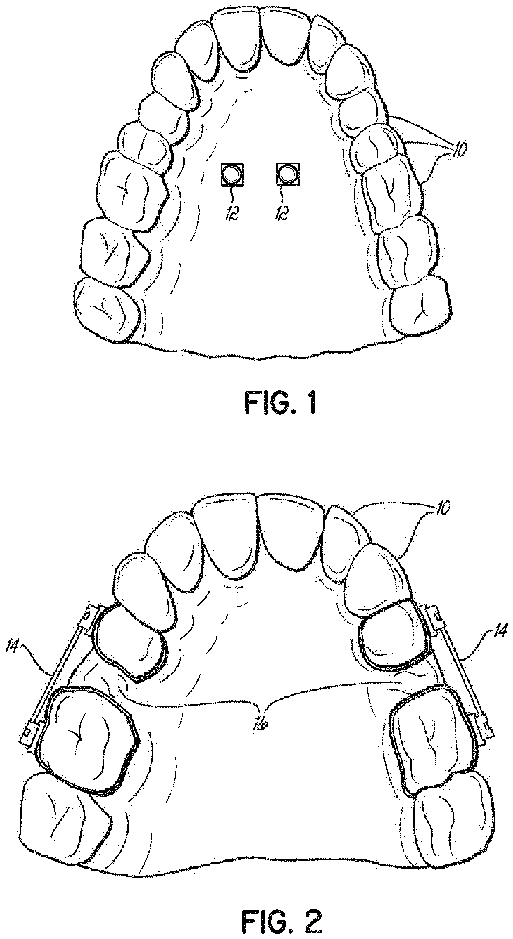

An orthodontic appliance capable of moving teeth, according to a predetermined treatment plan is illustrated in Figs. 1 and 2. In particular, the orthodontic appliance may move one or more teeth from one orientation to another which advances the overall orientation of the teeth toward their final aesthetic positions. In one embodiment a series of individual orthodontic appliances may be utilized for complete orthodontic treatment. Accordingly, each appliance in the series may move one or more teeth a prescribed amount. Cumulatively, these individual amounts may result in complete treatment of the patient's malocclusion.

By way of example only, in one embodiment, the orthodontic appliance may include an aligner. Such aligners include components similar to those disclosed in U.S. Patent No. 5,975,893 but differ in the manner in which the aligner is made, and further, include features not disclosed in the referenced patent, as is described in detail below. The aligner may be configured to fit over or encapsulate multiple teeth on one of the mandible or maxilla.

In one embodiment, an aligner may be one of a series of aligners that are prescribed to treat a patient's malocclusion or a portion thereof by moving one or more teeth from the misaligned position toward their orthodontically correct position. For instance, the aligner, according to one embodiment, may move a single tooth from one orientation to another orientation. This movement may be predetermined according to a treatment plan that includes a starting orientation and a final orientation. The starting orientation may be the initial orientation before treatment begins or any of the subsequent, intermediate tooth orientations as determined by a previous aligner or another orthodontic device. The final orientation for any aligner in a series of aligners may include a position that is intermediate between the starting orientation and the final orientation or it may be the functional and aesthetically pleasing position for the tooth desired at the conclusion of treatment. In this regard, in one embodiment, a system for treating a malocclusion may include a series of aligners differing in their configuration sufficient to fulfill a predetermined treatment plan. Accordingly, each respective aligner may incrementally move one or more teeth from their misaligned positions toward or to their aesthetically correct orfinal orientation. The appliance may include aligners that are not to be secured to the patient's teeth with adhesives or such, but it will be appreciated that the appliance may be adhesively joined to another orthodontic appliance and/or to the patient's teeth during orthodontic treatment. Furthermore, though not shown, it will also be appreciated that the appliance may alternatively be used on either or both of the maxilla and mandible.

By way of example, the aligner may substantially conform to one or more of the teeth on the jaw over which the aligner is placed. The aligner may encapsulate or nearly replicate the reverse shape of each tooth. However, there may be teeth in contact with the aligner that may not match or conform to the aligner.

An aligner and an extender may be used as a combination appliance, working in conjunction with one or more TADs. Fig. 1 is perspective view of a patient's palate showing an exemplary location where TADs may be attached as part of carrying out the presently disclosed method. As seen, TADs are positioned in the patient's palate so as to provide an anchor point for the aligner and extender. It will be appreciated, however, that TAD's may also be positioned on the patients mandible or maxilla or any other location in the mouth as is needed to provide desired force.

Fig. 2 is a perspective view of a patient wearing sectional braces close to the extraction of the second premolar, illustrating one circumstance in which the presently disclosed method, which is not part of the present invention, is advantageous in providing an anchor point for forces to close the gap left by the extraction.

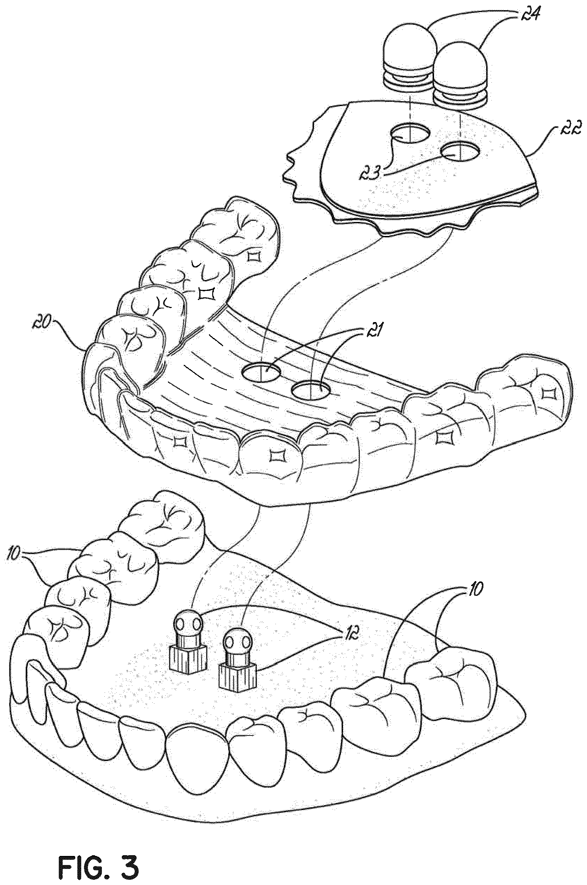

As noted above, an aligner and extender may be used, in conjunction with one or more TADs, to provide forces not possible using only an aligner. Fig. 3 is a disassembled perspective view of a patient's palate and teeth 10 including TADs 12, and an aligner 20 formed to fit over the teeth 10, which varies from a conventional aligner in that a conventional aligner is typically trimmed along the gingival boundary, whereas the aligner pictures in Fig. 3 includes a palatal section for engaging the TADs 12 and extender 22, and holes 21 formed in the palatal section through which the TADs may be installed. Fig. 3 further illustrates the extender 22 for this embodiment, which is manufactured for installation in the mouth generally overlying the palatal section of the aligner 20, and which also apertures 23 for engaging to the TADs 12. TAD caps 24 are engaged to the TADs 12 to lock the aligner 20 and extender 22 in place on the TADs 12.

The extender 22 in this embodiment has the effect of transferring forces from the TADs 12 via the palatal extension of the aligner to the aligner 20 itself, and further, the extender 22, which may be of a less resilient material than the aligner 20, can provide mechanical support to the aligner in the application of those forces which might otherwise overwhelm the resiliency of the aligner, particularly where the aligner has been trimmed to avoid braces or other features on the teeth (such as seen in Fig. 2) and thus aligner 20 is weakened in a particular area.

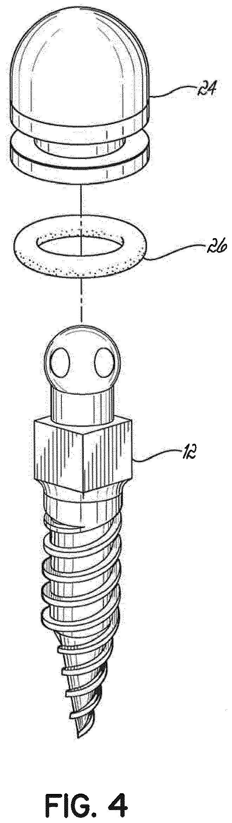

Fig. 4 is an illustration of the components of a TAD of the type suitable for use with the appliances described herein. As seen in this figure, the TAD 12 features an anchor screw section which is driven into the bone tissue of the palate, maxilla or mandible, and which terminates in an engagement head. A washer 26 is typically placed over the engagement head and the aligner 20 and/or extender 22 (not shown in Fig. 4, see Fig. 3) placed thereover, to ensure solid engagement to the TAD, and then a TAD cap 24 locks the washer 26, aligner 20 and extender 22 in place, which typically has interlocking cams that engage cams or features on the head of the screw section 28.

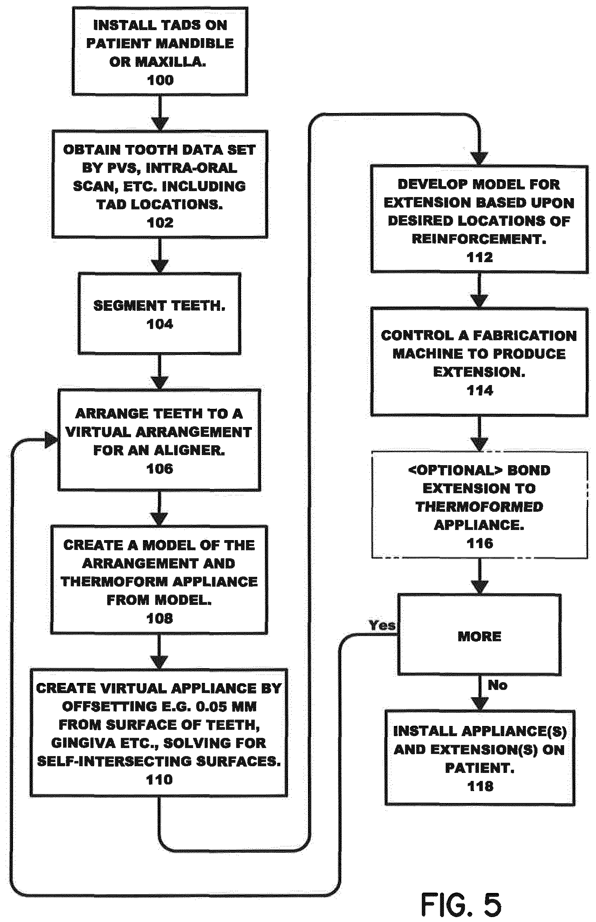

Fig. 5 is a flow chart of a suitable manufacturing process, which is not part of the present invention, which comprises:
Step 100. Installing TADs on the patient's palate, maxilla or mandible, e.g. as shown in Fig. 1.
Step 102. Obtaining a data set representing the patient's initial tooth arrangement and gingival tissue, e.g. by PVS impression, intra-oral scanning; the data set includes the TAD locations for future steps.
Step 104. Segmenting the teeth to obtain individual data sets of each tooth located in their initial arrangement. For details on this step, see Andreiko et al., US Patent 6,616,444.
Step 106. Creating a virtual arrangement of the individual teeth to represent an ideal final position or an intermediate position desired as part of a treatment plan.
Step 108. Form the aligner, e.g., by creating a physical model of the virtual arrangement developed in step 106 through computer aided manufacturing, or a mold in which a cast of the model may be made. In this embodiment, the appliance is thermoformed over the physical model and trimmed, and apertures (See 21, Fig. 3) are cut in the resulting aligner appliance to receive the TADs at the locations known from the tooth data set developed in step 102. The appliance may be further modified to include a cutout to facilitate a button/bracket placement, such as with a semi-elliptical shape toward the occlusal, so the appliance avoids the bracket or button. When using elastics attached to the button, the appliance may be modified to include a hook so the elastic can be anchored to the appliance. The hook is simply a cutout in the appliance shaped similar to a hockey stick approximately 2mm long by 0.25mm wide. Depending of the material used to create the appliances, post-process of each appliance such as polishing or tumbling may be necessary to obtain a perfectly clear appliance. In an alternative embodiment of Step 108, the appliance may be directly fabricated by controlling an SLA machine to form the appliance, including the TAD apertures and other described features already in place. Direct manufacturing using a suitable stereolithgraphy material such as Accura 60 and VeroClear FullCure810 is described in greater detail in US Patent Application Serial No. 13/650,886 filed October 12, 2012, and published as US2013/0095446.
Step 110. Create a virtual appliance model by offsetting the surfaces of the teeth in the virtual arrangement inner surface by, e.g., approximately 0.05 mm from the surface of each crown and solving for any self-intersecting surfaces, thus modeling the aligner that would be produced by the thermoforming of step 106. When neighboring crowns have sufficient space between them, the virtual appliance surface will offset the mesial/distal surface of the crowns and the gingival surface between the crowns. When the distance is approximately 0.10mm or less, the inner surface will terminate at the intersection of the surfaces near the occusal surface. Calculation of the outer appliance surface is provisionally 0.30mm offset from the inner surface but can be increased at targeted locations depending on the programmed movement of individual teeth.
Step 112. Develop a virtual model for an appliance extension based upon the desired locations of reinforcement, using as a boundary for the extension model the virtual appliance boundary previously created in step 110. The virtual extension is defined to include apertures to receive the TADs at the locations known from tooth data set developed in step 102. The extension can be further modified if needed to avoid any auxiliaries such as buttons & elastics and/or sectionals.
Step 114. Control a fabrication machine to produce the extension according to the virtual model. This step may be performed by direct SLA manufacture of the extension, or indirectly by SLA manufacture of a mold that itself can be used to form the extension or to create a cast from which one can form the extension. Depending on the material and process used to create the extension, post-processing of the extension may be necessary to obtain a perfectly clear appliance. 3D printing machines will generally create a product with surface roughness; a smoother surface which may be achieved by tumbling with silicon crystals and then coating with UV polymerized clear coat. Depending on the material, extensions fabricated with SLA machines can be spun to remove the excess material and then baked in a UV oven to remove any build lines.
Step 116. Optionally bond the extension from step 114 to the thermoformed appliance from step 108.

The above steps 106 to 116 may be repeated to make a series of appliances or extensions for a sequence of tooth positions, in which each of the several appliances is matable to a unique one of the several extensions, and/or one extension may be compatible and used with more than one appliance, or vice versa, as is possible and necessary to carry out a treatment plan.

Step 118. Install the appliance(s) and extension(s) on the patient, in a sequential manner if called for by the treatment plan.

While the present invention has been illustrated by a description of various embodiments and while these embodiments have been described in some detail, additional advantages and modifications will readily appear to those of ordinary skill in the art.

## Claims

1. An orthodontic appliance for moving teeth comprising an aligner (20) comprising a polymeric material formed with plural cavities for applying a load to at least one tooth sufficient to cause movement of at least one tooth, and an extender (22) in a shape matable to the aligner (20) for applying a supportive load to the aligner (20) to assist in the movement of at least one tooth by the aligner (20), wherein the extender (22) comprises an aperture (21), **characterised in that** the extender (22) comprises a polymeric material, and **in that** the appliance further comprises a temporary anchorage device (12) configured for installation in bone structure of a patient, wherein the extender's aperture (21) is configured for engagement to the temporary anchorage device (12) such that the temporary anchorage device (12) is couplable to the extender (22) to provide a mechanical anchor for the supportive load applied to the aligner (20).

2. The orthodontic appliance of claim 1 wherein the aligner (20) encapsulates all of the teeth of a patient's mandible or maxilla.

3. The orthodontic appliance of either claim 1 or claim 2 wherein the polymeric material of the aligner is capable of applying a load to a tooth sufficient to cause remodeling of adjacent bone.

4. The orthodontic appliance of any preceding claim wherein the aligner is formed in a series of layers that collectively form the plural cavities.

5. The orthodontic appliance of any preceding claim wherein the extender is formed in a series of layers.

6. The orthodontic appliance of any preceding claim further comprising an additional aligner comprising a polymeric material formed with plural cavities for applying a load to at least one tooth sufficient to cause movement of at least one tooth,
wherein the extender (22) is in a shape matable to the additional aligner for applying a supportive load to the additional aligner to assist in the movement of at least one tooth by the additional aligner.

7. The orthodontic appliance of any one of claims 1 to 5 further comprising
an additional aligner comprising a polymeric material formed with plural cavities for applying a load to at least one tooth sufficient to cause movement of at least one tooth,
an additional extender comprising a polymeric material in a shape matable to the additional aligner for applying a supportive load to the additional aligner to assist in the movement of at least one tooth by the additional aligner, and
wherein the additional extender comprises an aperture for engagement to the temporary anchorage device (12) such that the temporary anchorage device (12) is couplable to the additional extender to provide a mechanical anchor for the supportive load applied to the additional aligner.

8. The orthodontic appliance of any one of claims 1 to 5 further comprising
an additional extender comprising a polymeric material in a shape matable to the aligner for applying a supportive load to the aligner to assist in the movement of at least one tooth by the aligner, and
wherein the additional extender comprises an aperture for engagement to the temporary anchorage device (12) such that the temporary anchorage device (12) is couplable to the additional extender to provide a mechanical anchor for the supportive load applied to the aligner.

9. The orthodontic appliance of claim 6 wherein the additional aligner comprises an aperture for engagement to the temporary anchorage device (12) such that the temporary anchorage device (12) is couplable to the additional aligner and extender to provide a mechanical anchor thereto.

10. The orthodontic appliance of claim 7 wherein at least one of the aligner (20) and the additional aligner comprises an aperture for engagement to the temporary anchorage device (12) such that the temporary anchorage device (12) is couplable to thereto to provide a mechanical anchor.

11. The orthodontic appliance of claim 8 wherein the aligner (20) comprises an aperture for engagement to the temporary anchorage device (12) such that the temporary anchorage device (12) is couplable to the aligner (20) and extender to provide a mechanical anchor thereto.

## Patentansprüche

1. Kieferorthopädisches Instrument zum Bewegen von Zähnen, das einen Ausrichter (20) umfasst, der ein polymeres Material, das mit mehreren Hohlräumen zum Aufbringen einer Last auf wenigstens einen Zahn ausgebildet ist, die ausreicht, um eine Bewegung von wenigstens einem Zahn zu bewirken, und einen Extender (22) mit einer solchen Form umfasst, dass er mit dem Ausrichter (20) zusammengesteckt werden kann, um eine Stützlast auf den Ausrichter (20) aufzubringen, um beim Bewegen wenigstens eines Zahns durch den Ausrichter (20) zu assistieren, wobei der Extender (22) eine Öffnung (21) aufweist, **dadurch gekennzeichnet, dass** der Extender (22) ein polymeres Material umfasst, und dadurch, dass das Instrument ferner eine temporäre Verankerungsvorrichtung (12) umfasst, konfiguriert zum Installieren in der Knochenstruktur eines Patienten, wobei die Öffnung (21) des Extenders für den Eingriff mit der temporären Verankerungsvorrichtung (12) konfiguriert ist, so dass die temporäre Verankerungsvorrichtung (12) mit dem Extender (22) gekoppelt werden kann, um einen mechanischen Anker für die auf den Ausrichter (20) aufgebrachte Stützlast bereitzustellen.

2. Kieferorthopädisches Instrument nach Anspruch 1, wobei der Ausrichter (20) alle Zähne von Unterkiefer oder Oberkiefer eines Patienten verkapselt.

3. Kieferorthopädisches Instrument nach Anspruch 1 oder Anspruch 2, wobei das polymere Material des Ausrichters eine Last auf einen Zahn aufbringen kann, die ausreicht, um eine Ummodellierung von benachbartem Knochen zu bewirken.

4. Kieferorthopädisches Instrument nach einem vorherigen Anspruch, wobei der Ausrichter in einer Serie von Schichten ausgebildet ist, die kollektiv die mehreren Hohlräume bilden.

5. Kieferorthopädisches Instrument nach einem vorherigen Anspruch, wobei der Extender in einer Serie von Schichten ausgebildet ist.

6. Kieferorthopädisches Instrument nach einem vorherigen Anspruch, das ferner einen zusätzlichen Ausrichter umfasst, der ein polymeres Material umfasst, das mit mehreren Hohlräumen zum Aufbringen einer Last auf wenigstens einen Zahn ausgebildet ist, der ausreicht, um eine Bewegung wenigstens eines Zahns zu bewirken,
wobei der Extender (22) eine solche Form hat, dass er mit dem zusätzlichen Ausrichter zusammengesteckt werden kann, um eine Stützlast auf den zusätzlichen Ausrichter aufzubringen, um beim Bewegen wenigstens eines Zahns durch den zusätzlichen Ausrichter zu assistieren.

7. Kieferorthopädisches Instrument nach einem der Ansprüche 1 bis 5, das ferner Folgendes umfasst:
einen zusätzlichen Ausrichter, der ein polymeres Material umfasst, das mit mehreren Hohlräumen zum Aufbringen einer Last auf wenigstens einen Zahn ausgebildet ist, die ausreicht, um eine Bewegung von wenigstens einem Zahn zu bewirken,
einen zusätzlichen Extender, der ein polymeres Material mit einer solchen Form umfasst, dass er mit dem zusätzlichen Ausrichter zusammengesteckt werden kann, um eine Stützlast auf den zusätzlichen Ausrichter aufzubringen, um beim Bewegen wenigstens eines Zahns durch den zusätzlichen Ausrichter zu assistieren, und
wobei der zusätzliche Extender eine Öffnung für den Eingriff mit der temporären Verankerungsvorrichtung (12) umfasst, so dass die temporäre Verankerungsvorrichtung (12) mit dem zusätzlichen Extender gekoppelt werden kann, um einen mechanischen Anker für die auf den zusätzlichen Ausrichter aufgebrachte Stützlast bereitzustellen.

8. Kieferorthopädisches Instrument nach einem der Ansprüche 1 bis 5, das ferner Folgendes umfasst:
einen zusätzlichen Extender, der ein polymeres Material mit einer solchen Form umfasst, dass er mit dem Ausrichter zusammengesteckt werden kann, um eine Stützlast auf den Ausrichter aufzubringen, um beim Bewegen wenigstens eines Zahns durch den Ausrichter zu assistieren, und
wobei der zusätzliche Extender eine Öffnung für den Eingriff in die temporäre Verankerungsvorrichtung (12) umfasst, so dass die temporäre Verankerungsvorrichtung (12) mit dem zusätzlichen Extender gekoppelt werden kann, um einen mechanischen Anker für die auf den Ausrichter aufgebrachte Stützlast bereitzustellen.

9. Kieferorthopädisches Instrument nach Anspruch 6, wobei der zusätzliche Ausrichter eine Öffnung für den Eingriff mit der temporären Verankerungsvorrichtung (12) umfasst, so dass die temporäre Verankerungsvorrichtung (12) mit dem zusätzlichen Ausrichter und Extender gekoppelt werden kann, um einen mechanischen Anker daran bereitzustellen.

10. Kieferorthopädisches Instrument nach Anspruch 7, wobei der Ausrichter (20) und/oder der zusätzliche Ausrichter eine Öffnung für den Eingriff mit der temporären Verankerungsvorrichtung (12) umfasst/umfassen, so dass die temporäre Verankerungsvorrichtung (12) damit gekoppelt werden kann, um einen mechanischen Anker bereitzustellen.

11. Kieferorthopädisches Instrument nach Anspruch 8, wobei der Ausrichter (20) eine Öffnung für den Eingriff mit der temporären Verankerungsvorrichtung (12) umfasst, so dass die temporäre Verankerungsvorrichtung (12) mit dem Ausrichter (20) und dem Extender gekoppelt werden kann, um einen mechanischen Anker daran bereitzustellen.

## Revendications

1. Appareil orthodontique servant à déplacer des dents comprenant un aligneur (20) comprenant un matériau polymère formé de plusieurs cavités pour appliquer à au moins une dent une charge suffisante pour entraîner un mouvement d'au moins une dent, et un extenseur (22) d'une forme pouvant épouser celle de l'aligneur (20) pour appliquer à l'aligneur (20) une charge de support afin d'aider au mouvement d'au moins une dent par l'aligneur (20), dans lequel l'extenseur (22) comprend une ouverture (21), **caractérisé en ce que** l'extenseur (22) comprend un matériau polymère, et **en ce que** l'appareil comprend en outre un dispositif d'ancrage temporaire (12) configuré pour être posé dans une structure osseuse du patient, dans lequel l'ouverture (21) de l'extenseur est configurée pour se mettre en prise avec le dispositif d'ancrage temporaire (12) de telle sorte que le dispositif d'ancrage temporaire (12) puisse être couplé à l'extenseur (22) afin de fournir un ancrage mécanique à la charge de support appliquée à l'aligneur (20).

2. Appareil orthodontique selon la revendication 1 dans lequel l'aligneur (20) encapsule toutes les dents d'une mandibule ou mâchoire d'un patient.

3. Appareil orthodontique selon la revendication 1 ou la revendication 2 dans lequel le matériau polymère est capable d'appliquer à une dent une charge suffisante pour entraîner un remodelage d'un os adjacent.

4. Appareil orthodontique selon l'une quelconque des revendications précédentes dans lequel l'aligneur est formé d'une série de couches qui forment collectivement les plusieurs cavités.

5. Appareil orthodontique selon l'une quelconque des revendications précédentes dans lequel l'extenseur est formé d'une série de couches.

6. Appareil orthodontique selon l'une quelconque des revendications précédentes comprenant en outre
un aligneur supplémentaire comprenant un matériau polymère formé de plusieurs cavités pour appliquer à au moins une dent une charge suffisante pour entraîner un mouvement d'au moins une dent,
dans lequel l'extenseur (22) a une forme pouvant épouser celle de l'aligneur supplémentaire pour appliquer à l'aligneur supplémentaire une charge de support afin d'aider au mouvement d'au moins une dent par l'aligneur supplémentaire.

7. Appareil orthodontique selon l'une quelconque des revendications 1 à 5 comprenant en outre
un aligneur supplémentaire comprenant un matériau polymère formé de plusieurs cavités pour appliquer à au moins une dent une charge suffisante pour entraîner un mouvement d'au moins une dent,
un extenseur supplémentaire comprenant un matériau polymère d'une forme pouvant épouser celle de l'aligneur supplémentaire pour appliquer à l'aligneur supplémentaire une charge de support afin d'aider au mouvement d'au moins une dent par l'aligneur supplémentaire, et
dans lequel l'extenseur supplémentaire comprend une ouverture destinée à se mettre en prise avec le dispositif d'ancrage temporaire (12) de telle sorte que le dispositif d'ancrage temporaire (12) puisse être couplé à l'extenseur supplémentaire afin de fournir un ancrage mécanique à la charge de support appliquée à l' aligneur supplémentaire .

8. Appareil orthodontique selon l'une quelconque des revendications 1 à 5 comprenant en outre
un aligneur supplémentaire comprenant un matériau polymère d'une forme pouvant épouser celle de l'aligneur pour appliquer à l'aligner une charge de support pour aider au mouvement d'au moins une dent par l'aligneur, et
dans lequel l'extenseur supplémentaire comprises an ouverture destinée à se mettre en prise avec le dispositif d'ancrage temporaire (12) de telle sorte que le dispositif d'ancrage temporaire (12) puisse être couplé à l'extenseur supplémentaire afin de fournir un ancrage mécanique à la charge de support appliquée à l' aligneur.

9. Appareil orthodontique selon la revendication 6 dans lequel l'aligneur supplémentaire comprend une ouverture destinée à se mettre en prise avec le dispositif d'ancrage temporaire (12) de telle sorte que le dispositif d'ancrage temporaire (12) puisse être couplé à l'aligneur supplémentaire et à l'extenseur afin de fournir un ancrage mécanique à ceux-ci.

10. Appareil orthodontique selon la revendication 7 dans lequel au moins l'un de l'aligneur (20) et de l'aligneur supplémentaire comprend une ouverture destinée à se mettre en prise avec le dispositif d'ancrage temporaire (12) de telle sorte que le dispositif d'ancrage temporaire (12) puisse être couplé à ceux-ci afin de fournir un ancrage mécanique.

11. Appareil orthodontique selon la revendication 8 dans lequel l'aligneur (20) comprend une ouverture destinée à se mettre en prise avec le dispositif d'ancrage temporaire (12) de telle sorte que le dispositif d'ancrage temporaire (12) puisse être couplé à l'aligneur (20) et à l'extenseur afin de fournir un ancrage mécanique à ceux-ci.
